# EUROPÄISCHE PATENTSCHRIFT

(11) **EP 1 233 264 B1**
(45) Veröffentlichungstag und Bekanntmachung des Hinweises auf die Patenterteilung: **22.12.2004**
(21) Anmeldenummer: 01100950.3
(22) Anmeldetag: 17.01.2001
(51) Int. Cl.: G01N 23/201, G21K 1/04, G01V 5/00

(54) **Anordnung zum Messen des Impulsübertragungsspektrums von elastisch gestreuten Röntgenquanten**
Apparatus for measuring the momentum transfer spectrum of elastically scattered x-ray quanta
Appareil pour la mesure du spectre de transfer de moment des photons rayons X

(43) Veröffentlichungstag der Anmeldung: 21.08.2002
(73) Patentinhaber: YXLON International Security GmbH, 22419 Hamburg (DE)
(72) Erfinder: Martens, Gerhard Dr.,, D-24558 Henstedt-Ulzburg (DE)
(74) Vertreter: Schnekenbühl, Robert Matthias L.

(56) Entgegenhaltungen:
- DE-A- 4 222 227
- DE-A- 4 445 876
- US-A- 5 265 144

## Beschreibung

Eine derartige Anordnung ist aus der DE-A-42 22 227 und der EP-B1-0 496 454 bekannt geworden. Nach den dortigen Lehren werden röntgenbasierte Untersuchungssysteme für große Objekte vorgestellt, die auf der Erfassung der elastischen Streuung von Röntgenstrahlen basieren. Die elastisch gestreute Röntgenstrahlung zeigt in ihrem Energiespektrum charakteristische Strukturen, aus denen auf die Art des streuenden Materials geschlossen wird. So ist es z.B. möglich, als Materialien wie Sprengstoffe oder Drogen in Behältnissen wie Reisegepäckstücken, Päckchen, Briefen oder dgl. zu identifizieren (H. Strecker; Automatische Gepäckkontrolle mit Röntgenstreustrahlung; Physik in unserer Zeit **30,** 31-34 (1999).

Der prinzipielle Unterschied der beiden oben angeführten Streustrahlsysteme liegt in der Verwendung unterschiedlicher Geometrien, die zur Bestrahlung des Untersuchungsobjekts herangezogen werden. In der DE-A 42 22 227 dient zur Bestrahlung ein Kegelmantelstrahlbündel, wie es in Fig. 1 mit weit übertriebenem Öffnungswinkel dargestellt ist. Das Primärstrahlbündel wird durch eine entsprechende Ringblende aus der den Röntgenfokus verlassenden Röntgenstrahlkeule ausgeblendet. Der Durchmesser des Primärstrahlkegelmantels im Objektraum bestimmt zunächst die horizontale räumliche Ortsauflösung. Sie liegt in der Größe einiger cm und ist nur unwesentlich durch die Wahl des Primärkegelöffnungswinkels und des Abstandes der Primärkollimatorblende zum Fokus variierbar, weil diese beiden Größen durch andere Systemparameter sehr stark eingeengt sind.

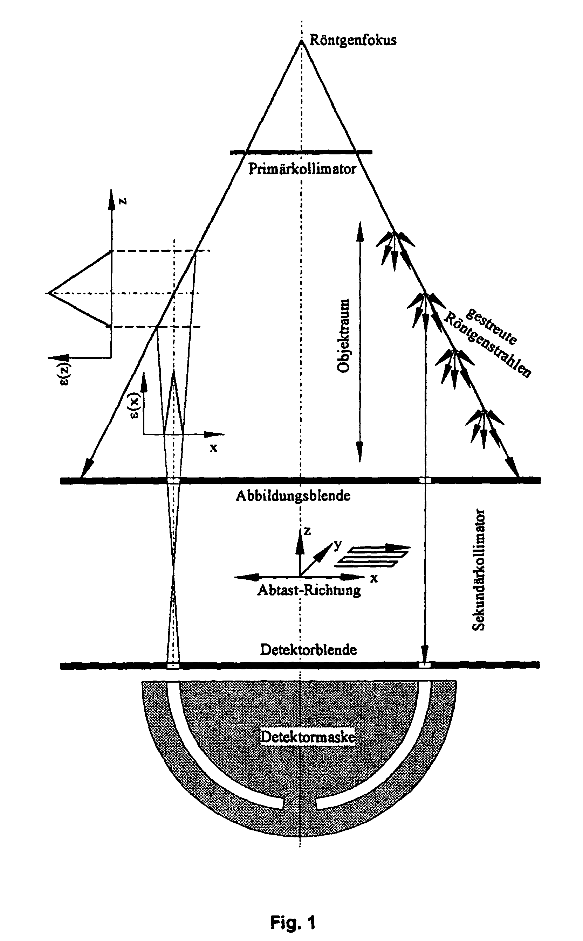

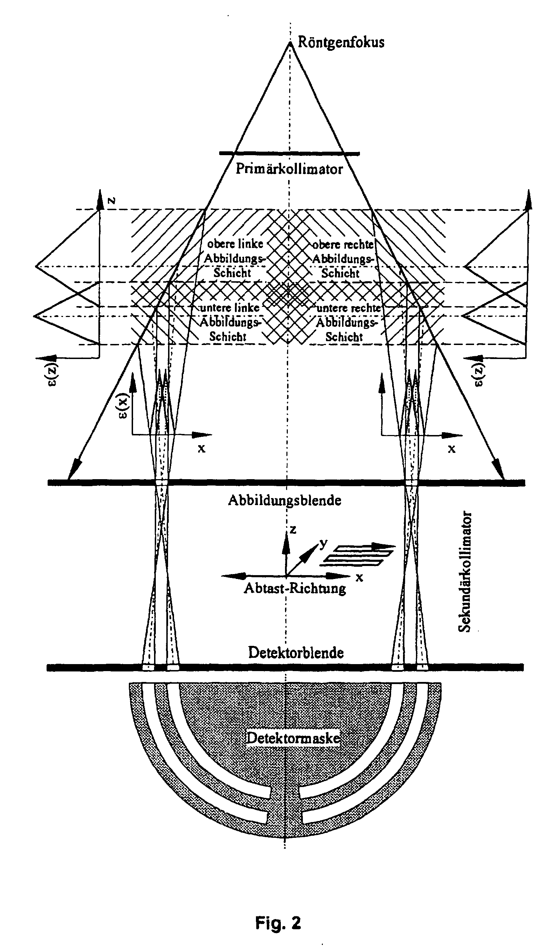

Durch im Objektraum befindliche Untersuchungsobjekte wird das primäre Röntgenlicht teilweise gestreut (siehe rechte Seite von Fig. 1). Teile dieses Streulichts werden über den Sekundärkollimator, der im wesentlichen aus einem kreisringförmigen Abbildungsblendensystem und einem Detektorblendensystem besteht, auf einen kreisringförmig segmentierten Detektor geführt. Durch mehrere nebeneinander liegende Schlitzsysteme erreicht man, daß der gesamte Objektraum vertikal in viele sich teilweise überlappende Abbildungsschichten aufgeteilt wird. In Fig. 2 wird z.B. gezeigt, wie man zwei übereinander liegende Abbildungsschichten über einen Abbildungsschlitz auf zwei Detektorelemente abbilden kann.

Die horizontale Abtastung des Untersuchungsobjekts geschieht durch ein mäanderförmiges Verfahren von Röntgen- und Detektorsystem und Untersuchungsobjekt mit zeitgetakteter Erfassung der Röntgensignale im Detektor.

Die räumliche Auflösung der untersuchten Teilvolumina (Voxel) des Objektraumes hängt ab
- in x-Richtung von der relativen Verfahrgeschwindigkeit, den zeitlichen Integrationsintervallen und dem Durchmesser des primären Röntgenkegels,
- in y-Richtung von dem Durchmesser des primären Röntgenstrahlkegels,
- in z-Richtung von den Schlitzbreiten aller involvierten Schlitzblenden.

Einen ersten Ansatz zur Reduktion der Auflösung findet man in der DE-A-44 45 876, in der halbringförmige Blendenstrukturen und ein halbringförmig strukturierter Detektor benutzt wird. Das linke und rechte Blendensystem sind dabei so zueinander verschoben angeordnet, daß die resultierenden Abbildungsschichten aus den linken und rechten Systemhälften vertikal ineinander verschachtelt sind und sich teilweise überlappen.

Jetzt hängt die x-Auflösung nur noch von der relativen Verfahrgeschwindigkeit und den zeitlichen Integrationsintervallen ab.

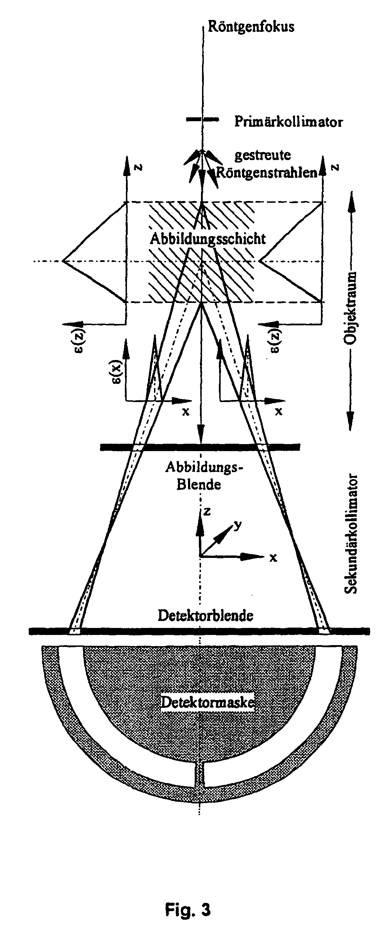

Im Gegensatz zur DE-A 42 22 227 verwendet die EP-B1 0496454 einen Nadelstrahl zur Bestrahlung des Untersuchungsobjekts. Eine Prinzipskizze dazu ist in Fig. 3 wiedergegeben.

Der Nadelstrahl wird mit Hilfe einer kleinen Lochblende von ca. 1mm Durchmesser aus der den Röntgenfokus verlassenden Röntgenstrahlkeule ausgeblendet. Da die Divergenz des Nadelstrahls sehr klein ist, beträgt sein Durchmesser im Objektraum ebenfalls nur ca. 1mm.

Die laterale Auflösung der Teilvolumina (Voxel) des Nadelstrahlsystems ist daher
- in y-Richtung sehr fein,
- in x-Richtung durch die relative Verfahrgeschwindigkeit, die zeitlichen Integrationsintervalle einstellbar,
- in z-Richtung von den Schlitzbreiten aller involvierten Schlitzblenden abhängig.

Die Notwendigkeit der Anpassung der Ortsauflösung an das Prüfobjekt ergibt sich aus der Prüfaufgabe. So ist die Streustrahlgeometrie zur Untersuchung von Behältnissen nach den unterschiedlichsten Stoffen, wie z.B. Reisegepäck nach Sprengoder Drogenstoffen mit Minimalmengen von einigen 100g deutlich unterschiedlich zur Untersuchung von Aktentaschen, Päckchen und Briefen nach entsprechenden Vorrichtungen mit wesentlich kleineren Mengen an Spreng- oder Drogenstoffen im Bereich weniger 10g. Es ist daher wünschenswert, ein Röntgenstreustrahlsystem zur Verfügung zu haben, das gleichermaßen große und kleine zu detektierende Stoffmengen sicher erfassen kann. Es versteht sich, daß dieses als Anordnung leicht und schnell handhabbar sein sollte.

Aufgabe der Erfindung ist es daher die eingangs genannte Anordnung derart zu verbessern, daß sie an das jeweilige Prüfobjekt und seinen Inhalt anpassbar ist. Sie soll gestatten, z.B. nach einem Grobscan über ein Behältnis, wie ein Gepäckstück oder dgl. in Verdachtsfällen die kritischen Bereiche nochmals verfeinert lokal zu untersuchen oder aus einem andersartig begründeten Verdacht heraus bereits von vornherein eine Vollabtastung mit hoher Ortsauflösung, d.h. mit hoher Empfindlichkeit für kleine Mengen durchzuführen.

Die Aufgabe wird erfindungsgemäß durch die eingangs genannte Anordnung gelöst, die im Anspruch 1 gekennzeichnet ist. Danach kann die Ortsauflösung mittels verschiebbarer Blenden schnell umgeschaltet werden. Die mechanische Umschaltung über Blenden erstreckt sich dabei auf die y-Richtung und die z-Richtung der Ortsauflösung.

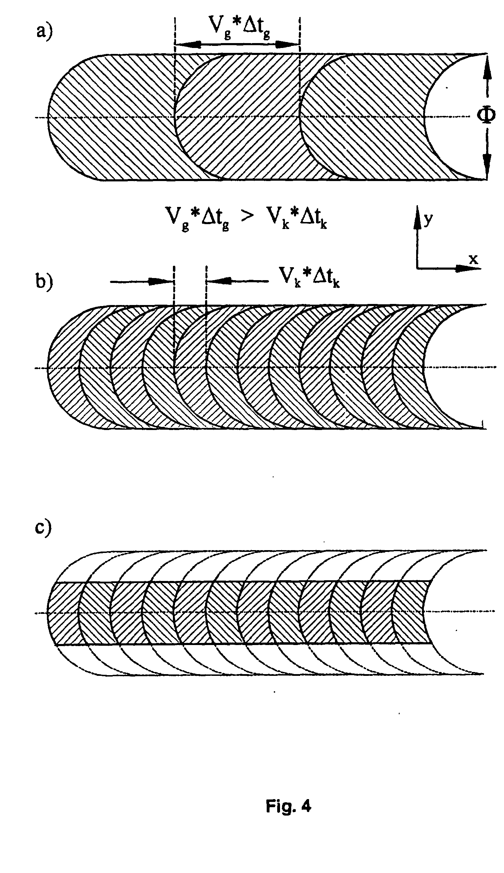

In x-Richtung erfolgt die Verfeinerung der Ortsauflösung Δx =V*Δt durch eine Verkleinerung der Relativgeschwindigkeit V oder/und eine Verkürzung der Integrationszeit Δt. In Fig. 4a sind die resultierenden Querschnitte einer Voxelfolge für den Fall eines Kegelmantelstrahlsystems mit Halbringdetektorelementen mit großer Meßzeit Δt_{g} und/oder großer Relativgeschwindigkeit V_{g} wieder gegeben In Teilbild b ist die Folge der Voxelquerschnitte für kleine Meßzeiten Δtₖ und/oder kleine Geschwindigkeiten Vₖ wiedergegeben.

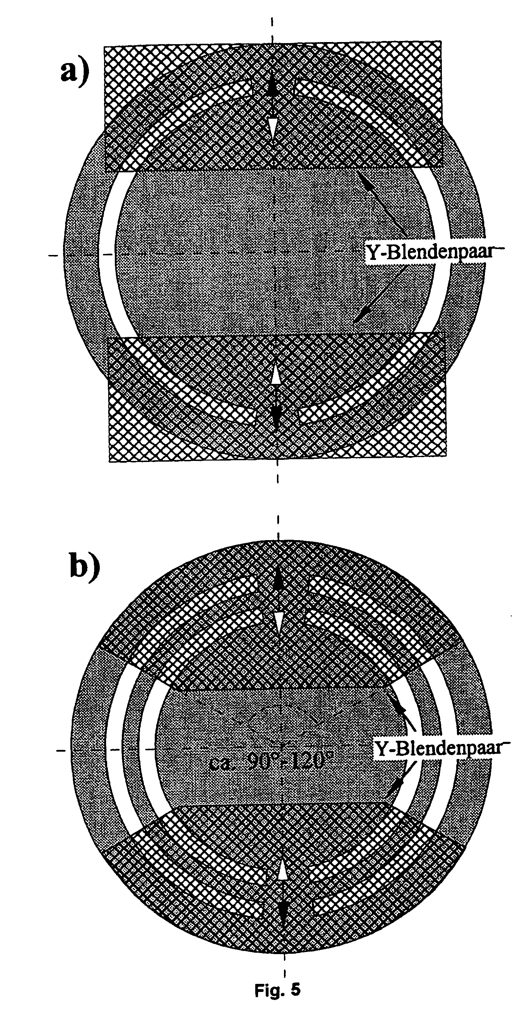

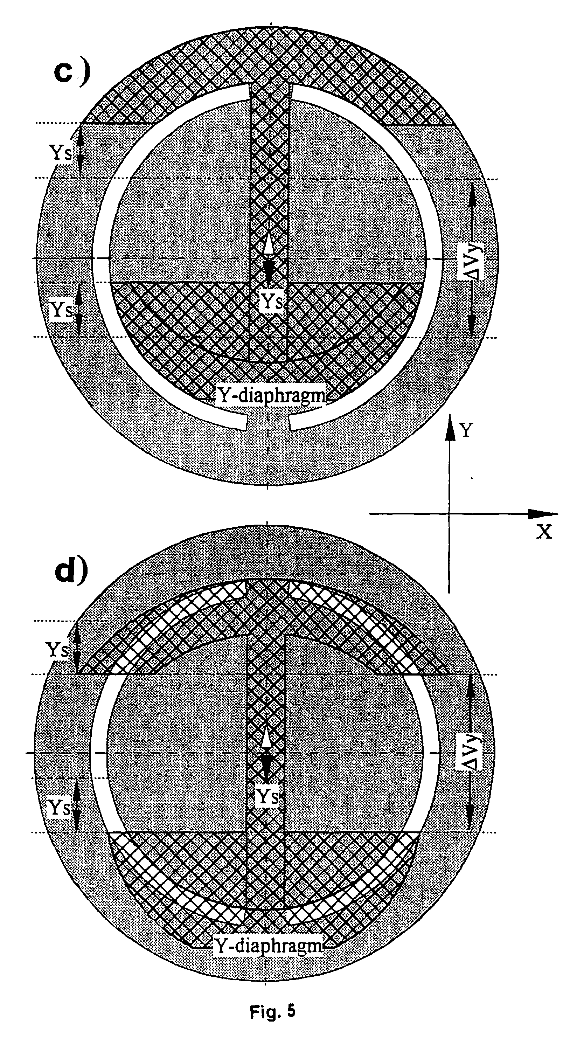

In y-Richtung erfolgt die Verfeinerung der Ortsauflösung durch eine verfahrbare, in das Röntgenstrahlbündel hineinragende Blende oder ein Blendenpaar. Es ist hierbei nahezu gleichgültig, ob bereits der Primärstrahlkegel durch ein Zusatzblendenpaar (Y-Blendenpaar) im oder unterhalb des Primärkollimators in seinem Durchmesser in Y-Richtung eingeschränkt wird oder die Breite des Streulichtbündels dicht oberhalb des Sekundärkollimators, im Sekundärkollimators oder unterhalb des Sekundärkollimators direkt vor dem Detektor über ein Y-Blendenpaar eingeengt wird. Bevorzugte Ausgestaltungen findet man für das primärseitige Y-Blendenpaar in Fig. 5a und für das sekundärseitige Y-Blendenpaar in Fig. 5b. Das Resultat der Querschnittseinengung des primären oder sekundären Röntgenstrahlbündels ist in Fig. 4c wieder gegeben. Es zeigt die Reihe nacheinander folgender in y-Richtung eingeschränkter Voxelquerschnitte. Der Einsatz des plattenförmigen Y-Blendenpaares erfordert die relativ lange gegensinnige Bewegung beider Teile, sowie einen gewissen Platzbedarf außerhalb der Kreisblenden, wenn der Strahlengang nicht eingeengt werden soll, weshalb die aus einem Teil bestehende Y-Blende bevorzugt wird (Fig. 5c/d).

Die erfindungsgemäß eingesetzten verschiebbaren Blenden(systeme) dienen dazu, die z-Ausdehnung der Voxel einzuschränken. Sie betreffen gleichermaßen die aus einem Kegelmantelstrahl resultierenden Voxel als auch die Voxel eines Nadelstrahlsystems.

Im folgenden werden bevorzugte Ausführungsformen der Erfindung näher erläutert, die zum besseren Verständnis der Erfindung beitragen sollen, auf die die Erfindung jedoch nicht beschränkt ist.

Es zeigt:
- Fig. 1: eine schematische Darstellung des Prinzips der Röntgenstreustrahlabbildung mit kegelmantelförmigen Primärstrahlbündel und stark übertriebenem Öffnungswinkel nach dem Stand der Technik;
- Fig. 2: eine schematische Darstellung eines Beispiels der Schichtausfüllung des Objektraumes mit Mehrfachschlitzsystemen im Sekundärkollimator nach dem Stand der Technik;
- Fig. 3: eine schematische Darstellung des Prinzips der Röntgenstreustrahlabbildung mit nadelstrahlförmigem Primärstrahlbündel nach dem Stand der Technik;
- Fig. 4: a) x-y-Querschnitte der "Kegelmantel"-Voxel mit Halbring Detektorstruktur für große Scangeschwindigkeit V_{g} und/oder langer Integrationszeiten Δt_{g};
b) x-y Querschnitte der Voxel für kleine Scangeschwindigkeiten Vₖ und/oder kurzer Integrationszeiten Δtₖ.
c) x-y-Querschnitte der Voxel mit nach Einengung der Strahlbündelbreite;
- Fig. 5: a) Blendenform der erfindungsgemäß eingesetzten Y-Blende für die primärseitige Einschränkung des Röntgenlichtbündels in Querrichtung
b) Blendenform der erfindungsgemäß eingesetzten Y-Blende für die sekundärseitige Einschränkung des Röntgenstreulichtbündels in Querrichtung
c) schematische Darstellung der Blendenform einer einteiligen Y-Blende im nicht aktiven Zustand und
d) schematische Darstellung der Blendenform der in Fig. 5c gezeigten einteiligen Y-Blende im aktiven Zustand;

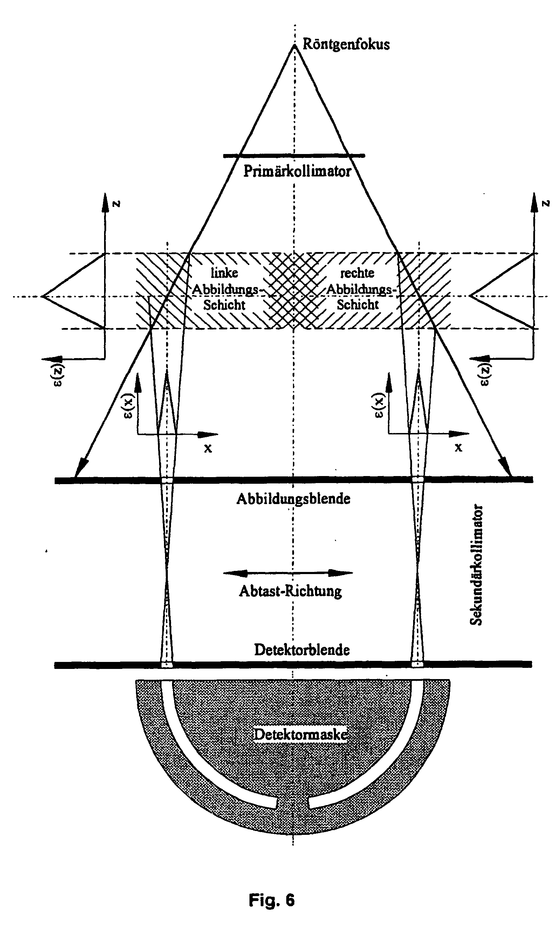

- Fig. 6: schematische Darstellung des symmetrischen Aufbaus der erfindungsgemäßen Anordnung eines Röntgenstreuabbildungssystems mit Halbringdetektor und gleicher Höhenlage der Abbildungsschichten;

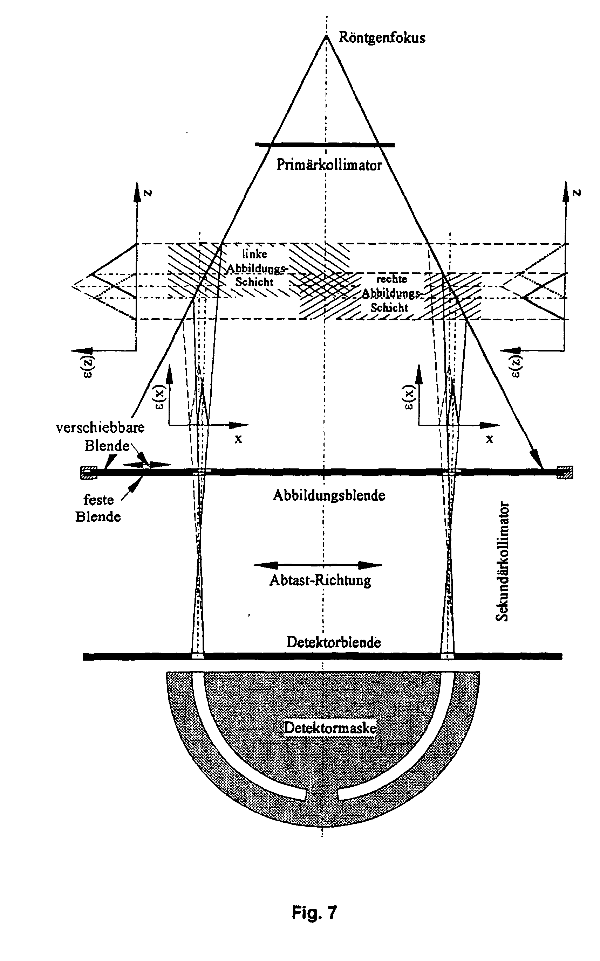

- Fig. 7: schematische Darstellung der erfindungsgemäßen Anordnung eines Röntgenstreuabbildungssystems mit doppelt ausgeführter Abbildungsblende und Querversatz der oberen Blende;

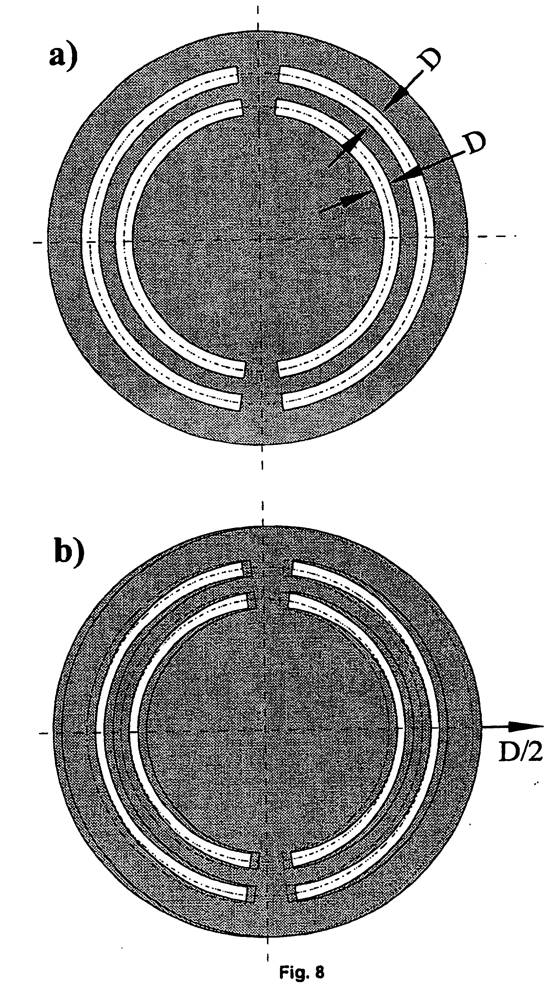

- Fig. 8: schematische Darstellungen des erfindungsgemäß als Doppelringblende ausgeführtes übereinander liegendes erfindungsgemäß eingesetztes Blendenpaar
a) ohne Querversatz und
b) mit relativem Querversatz um eine halbe Spaltbreite;

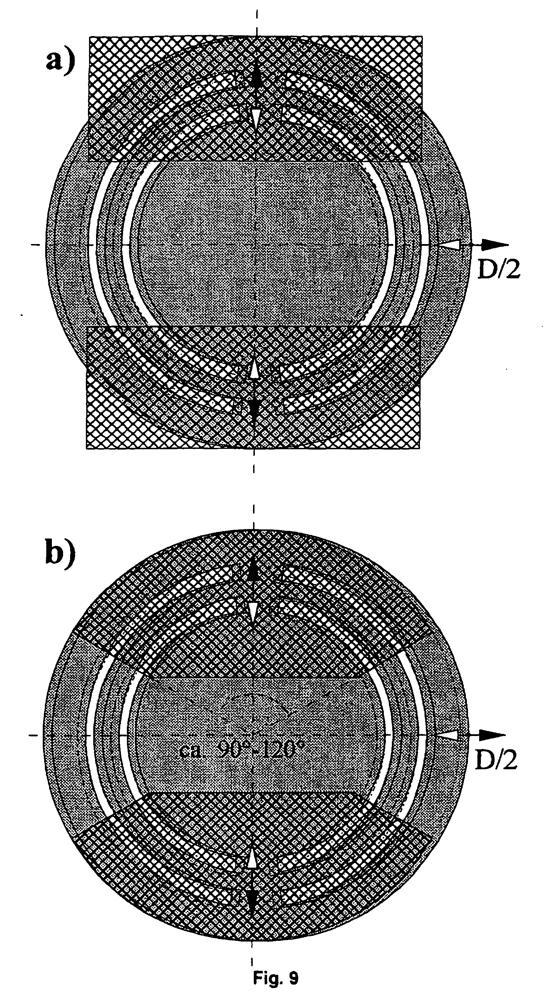

- Fig. 9: schematische Darstellung der Abdeckung der nicht optimalen Blendenbereiche durch das erfindungsgemäß eingesetzte Y-Blendenpaar;

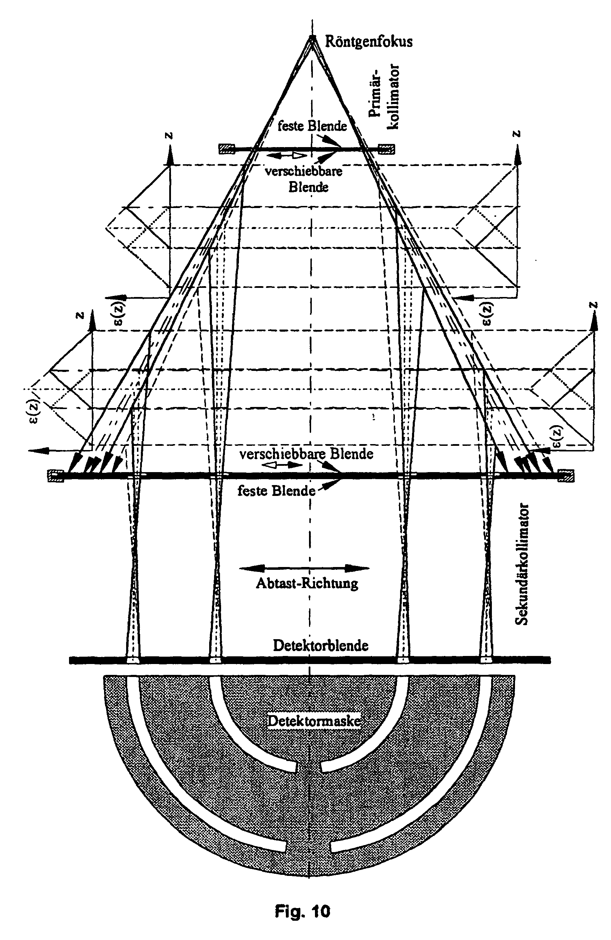

- Fig. 10: schematische Darstellung der erfindungsgemäßen Anordnung des Röntgenstreuabbildungssystems mit doppelt ausgeführter Abbildungsblende und doppelt ausgeführter Primärkollimatorblende. Der Versatz der verschiebbaren Ringblenden ist gegenläufig ausgeführt;

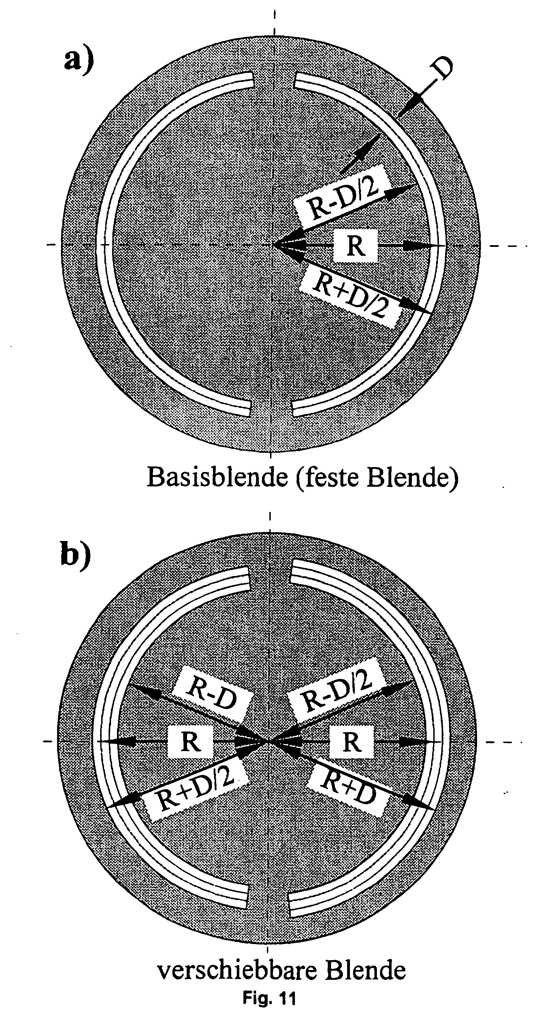

- Fig. 11: schematische Darstellung der Strukturen a) Basisblende und b) verschiebbaren Blende zur Reduktion der vertikalen Voxelgröße beim Nadelstrahlsystem;

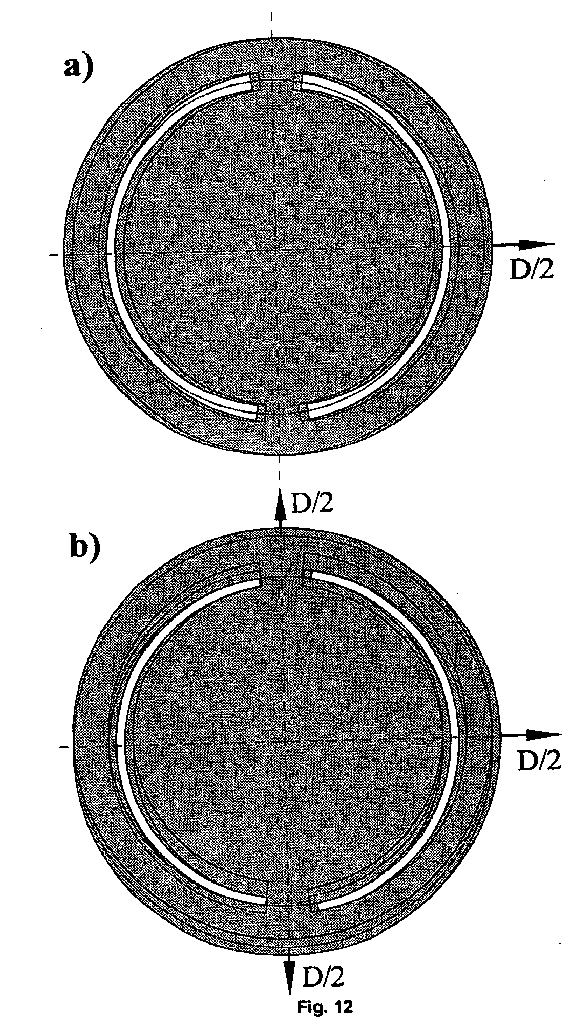

- Fig. 12: schematische Darstellung des Zusammenwirkens der a) ersten verschiebbaren Blende (Typ Fig.11b) mit der Basisblende (Typ Fig.11a) und b) den restlichen beiden verschiebbaren Blenden (Typ Fig.11b) des Nadelstrahlsystems;

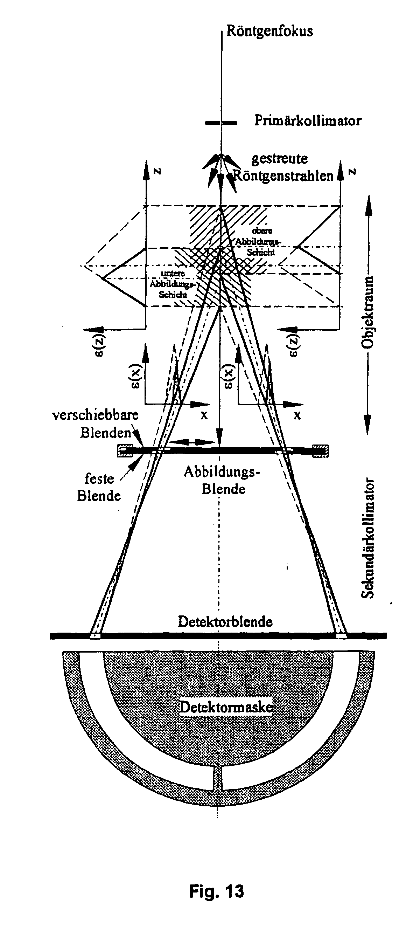

- Fig. 13: schematische Darstellung der Wirkungsweise des verschiebbaren Abbildungsblendensystems auf die vertikale Voxelgröße und die vertikale Voxelposition beim Nadelstrahlsystem mit Doppeldetektor;

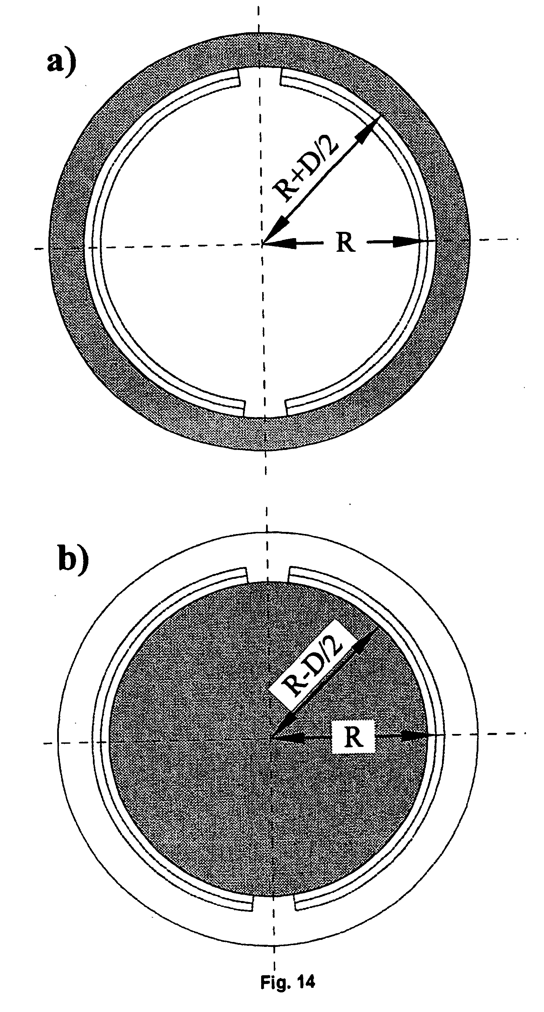

- Fig. 14: schematische Darstellung der beweglichen Zusatzblende für eine Nadelstrahlkonfiguration in Form einer
a) Kreisringblende mit Innenradius R+D/2 und
b) einer Vollkreisblende mit Außenradius R-D/2;

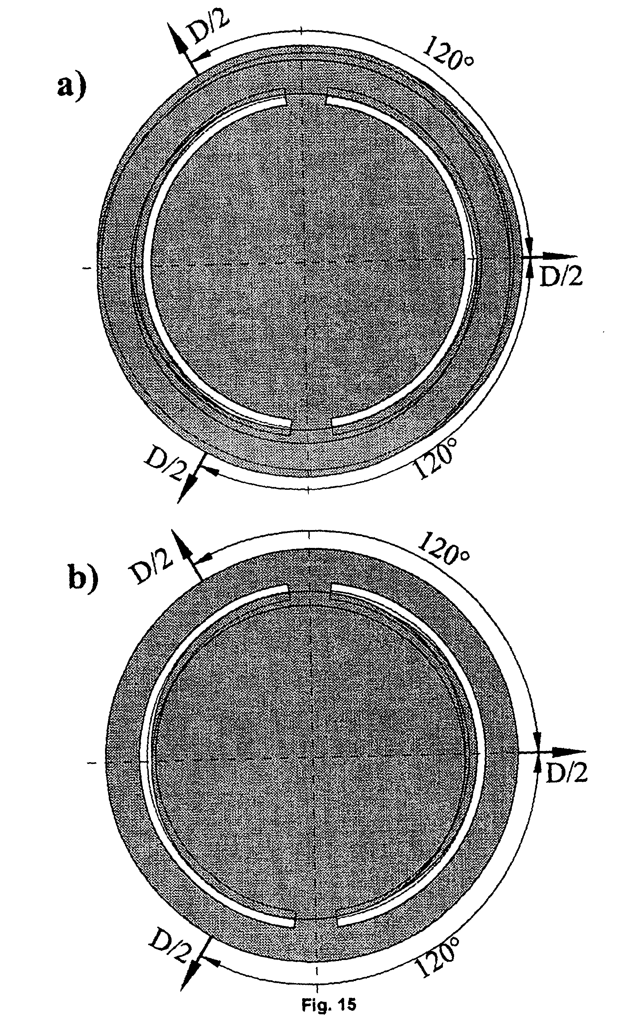

- Fig. 15: schematische Darstellung der Überlagerung der Basisblende mit a) drei Kreisringblenden jeweils in um 120° unterschiedlichen Richtungen um D/2 nach außen verschoben sind und b ) drei Vollkreisblenden, die ebenfalls in um 120° unterschiedlichen Richtungen um D/2 nach außen verschoben sind.

### Blendensystem zur Vertikaleinschränkung der "Kegelmantel"-Voxel

Die einteilige Y-Blende hat eine komplizierte Figur und besteht im wesentlichen aus drei Bereichen. Im nicht aktiven Zustand (Teilbild 5c) befindet sich ein Blendenbereich außerhalb des teilweise abzudeckenden Kreisringschlitzsystems und ein anderes Teilstück innerhalb des Kreisringsystems. Der dritte Teil ist ein mechanisches Verbindungsstück, das die beiden äußeren Bereiche der Y-Blende starr miteinander verkoppelt. Dieses Verbindungsteil ist hier als einfacher Stab oder Platte ausgelegt, kann jedoch, je nach den Bedürfnissen, auch eine andere Form aufweisen.

Eine Verschiebung der Blende in (minus)y-Richtung bewirkt zum einen, daß der außerhalb des Kreisringschlitzes liegende Teilbereich der Y-Blende nach innen wandert und den Kreisringschlitz teilweise abdeckt. Zum anderen wandert der im Innenkreis des Kreisringschlitzsystems liegende Teilbereich der Y-Blende nach außen und deckt dabei gleichzeitig den gegenüberliegenden Teilbereich des Kreisringschlitzsystems ab. Die Folge ist beabsichtigte Einschränkung der Breite des Kreisringschlitzsystems in y-Richtung (siehe Fig. 5d).

Die Erläuterung der Wirkungsweise der erfindungsgemäßen Blenden zur Vertikaleinschränkung der Abbildungsschichten wird von der Fig. 6 ausgehend erläutert. Fig. 6 ist eine Vervollständigung der Fig. 1 und zeigt für den Fall einer symmetrischen Halbringdetektormaske die Abbildungsschichtlagenzuordnung für die linke und die rechte Seite des Gesamtsystems. Vereinfachend sind hier zunächst nur zwei sich fast zu einem Kreisring ergänzende Halbringdetektorelemente dargestellt. Die Halbringdetektorelemente blicken jeweils durch die Detektorblende und die Abbildungsblende in den Objektraum. Die Schnitte der Detektor-Blicklinienbereiche mit dem Primärstrahlkegelbündel ergeben die vertikalen Lagen der jeweiligen Abbildungsschichten. Die beim Scanvorgang abgetasteten Voxel haben allerdings einen seitlichen Versatz (in x-Richtung), der bei der Datenauswertung adäquat berücksichtigt werden muß.

Zusätzlich sind in Fig. 6 die sogenannten Intensitäts- und Empfindlichkeitsprofile ε(x) und ε(z) eingetragen. Sie sind in großer Näherung Dreiecke und sind vereinfachend auch als solche dargestellt. Die Vertikalpositionen der linken und der rechten Empfindlichkeitsprofile der Abbildungsschichten sind deckungsgleich. Diese Tatsache kann bei Systemen für große Voxel dazu benutzt werden, die Signale der linken und rechten Seite adäquat zu addieren, um so die Signalausbeute zu verdoppeln. Als Konsequenz kann dadurch schneller abgetastet werden.

Wie aus der Fig. 6 zu entnehmen ist, hängen die Breiten der Empfindlichkeitsprofile (Halbwertsbreiten oder absolute Fußbreiten) von der Schlitzbreite der Abbildungsblende und der der Detektorblende ab. Die erfindungsgemäße Anordnung geht daher davon aus, die Schlitzbreite(n) der Abbildungsblende oder die Schlitzbreite(n) der Detektorblende oder die Breiten beider Blenden dynamisch zu verkleinern um die vertikale Voxelausdehnung zu verringern.

Eine Möglichkeit diese Verkleinerung vorzunehmen, besteht darin, einen anderen Sekundärkollimator mit kleineren Schlitzblenden motorisch an die Stelle des vorherigen zu verbringen. Dies ist jedoch wegen der großen Massen und der erforderlichen Präzision und des eingeschränkten Raumes im Scanner ein beliebig aufwendiges und teures Unterfangen. Dies gilt ebenso für einen kompletten motorisch durchzuführenden Austausch der Abbildungsblende, der Detektorblende oder gar beider gegen solche mit kleineren Schlitzbreiten.

Die erfindungsgemäße Anordnung sieht dagegen vor, die effektiven Schlitzbreiten direkt zu verkleinern. Dazu wird z.B. die Abbildungsblende durch zwei gleiche mit vorzugsweise halber Dicke ersetzt, die aber beide die gleiche Ringschlitzblendenstruktur aufweisen. Eine dieser Blenden (z.B. die untere) ist fest montiert. Die zweite Blende ist verschiebbar und z. B. direkt über der ersten angeordnet. Bei deckungsgleicher Lage beider ändert sich nichts gegenüber der in Fig. 6 dargestellten Situation der Schichtlagengleichheit von linker und rechter Systemhälfte. Sobald jedoch die bewegliche Blende nur ein wenig nach rechts verschoben wird, vorzugsweise um eine halbe Schlitzbreite, treten zwei Effekte ein. Wie in Fig. 7 skizziert ist, werden die Abbildungsschichten schmaler und ihre Höhenlage ändert sich. Die Abbildungsschicht der rechten Systemhälfte verschiebt sich nach unten und die Abbildungsschicht der linken Systemhälfte verschiebt sich nach oben. Beide behalten jedoch noch einen hinreichend große Überlappung.

Die Durchführung der Blendenverschiebung kann mit Elektromagneten erfolgen, weil die zurückzulegenden Wege lediglich im Bereich weniger zehntel Millimeter liegen.

In Fig. 8 ist die Wirkungsweise der Blendenverschiebung an der Draufsicht auf das Abbildungsblendenpaar für den Fall eines Doppelschlitzsystems dargestellt. Bei direkter deckungsgleicher Lage beider Blenden erhält man ein Halbkreisringsystem mit einheitlicher Schlitzbreite D. Verschiebt man jedoch eine dieser Blenden z.B. um D/2 nach rechts, so bleiben in der Umgebung des horizontalen Durchmessers (in der Papierebene verlaufender Durchmesser von links nach rechts) auf der linken und auf der rechten Seite nur noch die rechte Hälfte der Schlitze durchgängig. Die linken Hälften sind abgedeckt.

In der Umgebung des vertikalen Durchmessers (in der Papierebene verlaufender Durchmesser von unten nach oben) bleiben allerdings die Schlitzbreiten unten und oben so breit wie vorher. Diese Bereiche werden jedoch bereits durch das oben diskutierte y-Blendenpaar zur Voxelreduktion in Y-Richtung hinreichend weit abgedeckt, so daß für die effektiv wirksamen Schlitze noch ca. die angestrebte halbe Schlitzbreite wirksam ist (s. Fig. 9).

Es zeigt sich allerdings, daß die vertikale Voxelverschiebung und die Voxelverkleinerung durch die Verschiebung des oberen Teils der Abbildungsblende nicht gleichmäßig über den Objektraum für alle Abbildungsschichten abläuft. Die oberen Abbildungsschichten zeigen eine wesentlich stärkere relative Vertikalverschiebung als die unteren. Abhilfe laßt sich dadurch schaffen, daß die endliche Ausdehnung des Primärstrahlbündels und seine Auswirkung auf die Voxelgröße mit berücksichtigt wird. Die erfindungsgemäße Anordnung sieht daher vor, ebenfalls die Kreisringblende des Primärkollimators als direkt übereinander angeordnetes und bezüglich ihrer Ringstruktur deckungsgleiches Blendenpaar auszulegen. Eine Verschiebung des unteren Blendenteils des Primärkollimatorblendenpaares nach links bewirkt, daß die Teilvoxel der rechten Seite des Systems sich nach unten bewegen und daß die linken Teilvoxel des Systems sich nach oben verschieben. Es zeigt sich, daß hierbei die unteren Abbildungsschichten stärker verschoben werden als die oberen.

In Fig. 10 ist das Zusammenspiel von Abbildungsblendenpaar und Primärkollimatorblendenpaar gezeigt. Die verschiebbare Abbildungsblende wird nach rechts verschoben und die verschiebbare Primärkollimatorblende nach links. Beide gegensinnigen Blendenverschiebungen bewirken gleichsinnige Vertikalverschiebungen der Abbildungsschichten. Die Verschiebungen und die Breiten der oberen und der unteren dargestellten Abbildungsschichten sind nahezu gleich groß geworden.

### Blendensystem zur Vertikaleinschränkung der "Nadelstrahl"-Voxel

Bei einer Nadelstrahlkonfiguration, wie sie in Fig. 3 wiedergegeben ist, bedarf es zur Steigerung der Ortsauflösung lediglich der vertikalen Einschränkung des Voxels im Objektraum. Die Vertikaleinschränkung wird hier ebenfalls durch verschiebbare Teilblenden des Abbildungsblendensystems bewirkt. Im Gegensatz zum Kegelmantelstrahlsystem besteht das Abbildungsblendensystem hier nicht aus einer oder zwei Blenden mit identischen ringförmigen Strukturen, sondern aus einer fest montierten Basisblende einer bestimmten Ring/Teilring-Struktur und aus zusätzlich mindestens drei verschiebbaren Blenden mit einer zur Basisblende unterschiedlichen Ring/Teilring-Struktur.

Man muß bei der Diskussion des verschiebbaren Blendensystems der Nadelstrahlkonfiguration zwei unterschiedliche Detektorkonfigurationen/Masken betrachten.

Die eine Detektorkonfiguration besteht aus einem längs seines Durchmessers geteilten Doppeldetektorsystems, wie es in Fig. 3 angedeutet ist. Die zweite Detektorkonfiguration besteht aus einem ungeteilten Detektor.

Für das verschiebbare Blendensystem des geteilten Detektorsystems verwendet man eine feststehende Basisblende mit einer Struktur, wie sie in Fig. 11a wiedergegeben ist. Zusätzlich werden drei verschiebbare Blenden mit einer Struktur, die in Fig. 11b dargestellt ist, darüber angeordnet.

Die Funktionsweise dieses Blendensystems wird in Fig. 12 erläutert. Fig. 12a zeigt die Basisblende mit zunächst einer darüberliegenden verschiebbaren Blende (nach Typ Fig. 11b), die um eine halbe Schlitzbreite (D/2) nach rechts verschoben wurde. Als Ergebnis erhält man, daß in der Umgebung des horizontalen Durchmessers sich die effektiven Schlitzbreiten halbieren. In der Umgebungs des vertikalen Durchmessers sind die Schlitzbreiten mit der Größe D erhalten geblieben.

Durch zwei weitere verschiebbare Blenden des Typs Fig. 11b, die jeweils um D/2 nach unten und nach oben verschoben werden, erhält man die Halbringstruktur in Fig. 12b. Hier haben die Halbringschlitze mit großer Näherung entlang ihres gesamten Umfangs, wie beabsichtigt, die halbe Schlitzbreite der Basisblende. Zudem sind die Radien der beiden Halbringschlitze um D/2 unterschiedlich, also die Halbringe um D/2 untereinander versetzt.

Die Auswirkungen dieser effektiven Schlitzverkleinerung und effektiven Schlitzverschiebung auf die Voxelgröße wird in Fig. 13 gezeigt. Die verschiebbaren Blenden des Abbildungsblendensystems verschieben den Durchlaßbereich des Blendensystems nach rechts und verkleinern den Durchlaß. Dies bewirkt, daß das Voxel kleiner wird und sich das rechte Teilvoxel nach oben verschiebt und das linke Teilvoxel nach unten.

Bei der oben gemachten Voraussetzung der Auslegung des Detektors als geteilter Halbkreis- oder Halbringdetektor können simultan dann zwei übereinander liegende und sich teilweise überlappende Voxel mit verkleinerter Voxelhöhe erfaßt werden.

Will man aus Kosten- oder andereren Gründen keinen Doppeldetektor benutzten, sondern einen ungeteilten Detektor, muß zur Erreichung der maximalen Signalausbeute dafür Sorge getragen werden, daß mit der Verkleinerung der Schlitzbreiten die Schlitzradien längs des gesamten Umfangs der Abbildungsblende gleich sind.

Dies kann durch eine andere Strukturierung der verschiebbaren Blenden erreicht werden. In Fig. 14 sind zwei unterschiedliche Typen der beweglichen Blenden für diesen Fall dargestellt. Fig. 14a zeigt eine Kreisringblende mit dem Innenradius R+D/2, wobei R der Mittenradius der Basisblende ist (s. Fig. 11a). Fig. 14b zeigt eine als Vollscheibe ausgelegte verschiebbare Kreisblende mit dem Radius R-D/2.

Die Wirkungsweisen der Kreisring- und der Vollblende sind in Fig. 15 zusammengefaßt. Fig. 15a zeigt die effektive resultierende Schlitzverteilung, wenn die Basisblende mit drei Kreisringblenden überlagert wird und eine dieser Blenden nach rechts um D/2 verschoben wird; die anderen beiden werden jeweils nach links oben und nach links unten um D/2 verschoben. Die Bewegungsrichtungen untereinander betragen 120°. Das Resultat ist eine Halbringstruktur mit nahezu halber Schlitzbreite verglichen mit der Basisblende, wobei die freigebliebenen Teile der inneren Hälfte der Halbringe der Basisblende entsprechen.

Fig. 15b zeigt die effektive resultierende Schlitzverteilung, wenn die Basisblende mit drei Vollblenden überlagert wird und eine dieser Blenden nach rechts um D/2 verschoben wird; die anderen beiden werden wie in Fig. 15a jeweils nach links oben und nach links unten um D/2 verschoben. Die Bewegungsrichtungen untereinander betragen ebenfalls 120°. Das Resultat ist eine Halbringstruktur mit nahezu halber Schlitzbreite verglichen mit der Basisblende, wobei die freigebliebenen Teile der äußeren Hälfte der Halbringe der Basisblende entsprechen.

Man erkennt aus Fig. 15, daß hier mindestens drei verschiebbare Zusatzblenden notwendig sind, um eine annähernd vollständige Halbringstruktur mit nahezu halber Schlitzbreite zu erhalten. Eine größere Perfektion in der Schlitzbreite erhält man bei der Verwendung von vier Zusatzblenden, die in vier zueinander orthogonale Richtungen um jeweils D/2 verschoben werden.

## Patentansprüche

1. Anordnung zum Messen des Impulsübertragsspektrums von elastisch gestreuten Röntgenquanten mit
- einem polychromatischen Röntgenstrahler
- einer zwischen dem Röntgenstrahler und einem von der Röntgenstrahlung durchsetzten Untersuchungsbereich angeordneten Primärblendenanordnung zum Ausblenden eines den Untersuchungsbereich auf der Mantelfläche eines Kegels durchsetzenden Primärstrahlenbündels oder Nadelstrahlbündels
- einer aus mehreren, konzentrisch den Detektor-Mittelpunkt umschließenden Detektorelementen bestehenden Detektoranordnung zum Erfassen von im Untersuchungsbereich gestreuten Röntgenquanten
- einer zwischen dem Untersuchungsbereich und der Detektoranordnung angeordneten Sekundärblendenanordnung mit mindestens einem Abbildungsschlitz zum Abbilden der gestreuten Röntgenstrahlung auf die Detektoranordnung
- einer Vorrichtung zur Relativverschiebung zwischen einem im Untersuchungsbereich befindlichen Untersuchungsobjekt und der Untersuchungsanordnung zum Abtasten des Untersuchungsobjekts in einer Abtastrichtung x und
- Mitteln zur Verarbeitung der gemessenen Signale, und wobei die Detektoranordnung mit Hilfe von senkrecht zur Abtastrichtung angeordneten Trennbereichen in mindestens zwei in Abtastrichtung im wesentlichen gleich breite Detektorbereiche unterteilt ist, daß jeder der Detektorbereiche eine Anzahl von teilringförmigen Detektorelementen aufweist und daß jedem Detektorelement Mittel zur Signalverarbeitung zugeordnet sind, wobei der Röntgenstrahler, die Primärblendenanordnung, die Sekundärblendenanordnung und die Detektoranordnung in einer z-Richtung angeordnet sind,
**dadurch gekennzeichnet, daß**
a. mindestens eine in y-Richtung verschiebbare Blende zur Umschaltung zwischen feiner und grober Ortsauflösung der untersuchten Teilvolumina des Untersuchungsobjekts vorgesehen ist, die die effektive Strahlbreite quer zur Abtastrichtung einengt, wobei die y-Richtung senkrecht zur x-Richtung und zur z-Richtung ist, und daß
b. ein in x-Richtung verschiebbares Blendensystem zur Einschränkung der z-Ausdehnung der Teilvolumina vorgesehen ist, das mindestens zwei übereinander liegende bezüglich ihrer Kreisringstruktur identische Kreisringblenden mit relativem Querversatz zur Reduzierung der effektiven Abbildungsschlitzbreiten oder der Detektorschlitzbreiten umfaßt.

2. Anordnung nach Anspruch 1, **dadurch gekennzeichnet, daß** die in Y-Richtung verschiebbare Blende aus mindestens zwei Teilen besteht, die durch mindestens ein Kopplungsstück starr mechanisch miteinander verbunden sind, wobei sich mindestens ein Teil im nicht aktiven Zustand außerhalb der Kreisringschlitzstruktur und mindestens ein anderer Teil innerhalb derselben angeordnet ist, und wobei eine Verschiebung der Blende in Y-Richtung im aktiven Zustand mindestens einen außerhalb des Kreisringschlitzes liegenden Teil nach innen zur teilweisen Abdeckung desselben führt, während mindestens ein anderer innenliegender Teil nach außen geführt wird und gleichzeitig den gegenüberliegenden Teil der Kreisringstruktur abdeckt.

3. Anordnung nach Anspruch 1, **dadurch gekennzeichnet, daß** zwei voneinander getrennte in Y-Richtung verschiebbare Blenden zur Einengung der effektiven Strahlbreite quer zur Abtastrichtung vorgesehen werden.

4. Anordnung nach Anspruch 1 bis 3, **dadurch gekennzeichnet, daß** ein oder mehrere Elektromagnete zur Blendenverschiebung vorgesehen wird.

5. Verwendung der Anordnung nach den Ansprüchen 1 bis 4 in einem Untersuchungsbereich für unterschiedliche Mengen an kristallinen Stoffen, wie Sprengstoff und Drogen enthaltende Behältnisse, wie Gepäckstücke, Päckchen, Briefe und dgl..

## Claims

1. Arrangement for measuring the pulse transmission spectrum of elastically scattered X-ray quanta with
- a polychromatic X-ray source
- a primary screen arrangement positioned between the X-ray source and a test zone permeated by the X-ray radiation to shield a primary beam or pencil beam permeating the test zone on the outside surface of a cone
- a detector arrangement consisting of several, concentric detector elements surrounding the midpoint of the detector to detect the X-ray quanta scattered in the test zone
- a secondary screen arrangement positioned between the test zone and the detector arrangement with at least one image slot to map the scattered X-ray radiation on the detector arrangement
- a device providing relative movement between a test object located in the test zone and the test arrangement for scanning the test object in a scanning direction x and
- devices for processing the measured signals, and on which the detector arrangement is split into at least two detector areas which are basically equally wide in the scanning direction with the aid of separating areas positioned perpendicular to the scanning direction so that each of the detector areas has a number of partial ring-shaped detector elements and so that a device for signal processing is allocated to each detector element, in which the X-ray source, the primary screen arrangement, the secondary screen arrangement and the detector arrangement are set out in a z direction, **characterised in that**
a. at least one screen is provided which can be moved in the y direction for switching between fine and coarse resolution of the tested partial volumes of the test object, which thus restricts the effective beam width at right angles to the scanning direction, in which the y direction is perpendicular to the x direction and to the z direction, and that
b. a screen system which can be moved in the x direction is provided to restrict the z expansion of the partial volumes, that includes at least two circular ring screens lying one above the other which are identical in terms of their circular ring structure with a relative transverse offset for the reduction of the effective image slot widths or the detector slot widths.

2. Arrangement in accordance with claim 1, **characterised in that** the screen which can be moved in the y direction consists of at least two parts, which are rigidly mechanically linked together by at least one coupling piece, in which at least one part is positioned in the non-active condition outside the circular ring slot structure and at least one other part is positioned within it, and in which a displacement of the screen in the y direction in the active condition brings at least one part lying outside the circular ring slot inwards so that the latter becomes partially covered, while at least one other part lying inside is taken outside and covers the opposite part of the circular ring structure at the same time.

3. Arrangement in accordance with claim 1, **characterised in that** two screens separated from one another and movable in the y direction are provided to restrict the effective beam width at right angles to the scanning direction.

4. Arrangement in accordance with claims 1 to 3 **characterised in that** one or more electromagnets are provided for screen displacement.

5. Use of the arrangement in accordance with claims 1 to 4 in a test zone for various quantities of crystalline materials such as explosives and drugs contained in receptacles such luggage, packages, letters and such like.

## Revendications

1. Appareil pour la mesure du spectre de transfert d'impulsions de photons X diffusés de manière élastique avec
- un émetteur de rayons X polychromatique
- un appareil à diaphragme primaire disposé entre l'émetteur de rayons X et la zone d'analyse traversée par le rayonnement X destiné à enlever un faisceau de rayons primaires ou un faisceau de rayons très minces traversant la zone d'analyse sur la surface d'enveloppe d'un cône
- un appareil de détection composé de plusieurs éléments de détection entourant de façon concentrique le point médian du détecteur destiné à détecter des photons X diffusés dans la zone d'analyse
- un appareil à diaphragme secondaire disposé entre la zone d'analyse et l'appareil de détection avec au moins une fente de reproduction pour reproduire le rayonnement de rayons x diffusé sur l'appareil de détection
- un dispositif pour un déplacement relatif entre un l'objet d'analyse se trouvant dans la zone d'analyse et l'appareil d'analyse destiné à balayer l'objet d'analyse dans une direction de balayage x et
- des moyens pour le traitement des signaux mesurés et où l'appareil de détection est divisé en au moins deux zones de détection à la largeur essentiellement identique en direction de balayage au moyen de zones de séparation disposées perpendiculairement en direction de balayage, pour que chacune des zones de détection présente un nombre d'éléments de détection en forme d'anneau partiel et pour qu'on associe à chaque élément de détection, des moyens pour traiter les signaux ; l'émetteur de rayons X, l'appareil à diaphragme primaire, l'appareil à diaphragme secondaire et l'appareil de détection étant disposés dans une direction z,
**caractérisé en ce que**,
a. on a prévu au moins un diaphragme susceptible d'être déplacé dans la direction y pour basculer entre une résolution locale plus fine et plus grossière des volumes partiels examinés de l'objet d'analyse, lequel diaphragme rétrécit la largeur effective de rayonnement de façon transversale par rapport à la direction de balayage ; la direction y étant perpendiculaire à la direction x et à la direction z, et **en ce que**,
b. un système à diaphragme susceptible d'être déplacé dans la direction x est prévu pour limiter l'étendue z des volumes partiels, lequel système comprend au moins deux diaphragmes à anneaux circulaires identiques en ce qui concerne structure d'anneau circulaire et disposés l'un sur l'autre avec un décalage transversal relatif afin de réduire les largeurs effectives des fentes de reproduction ou les largeurs des fentes de détecteurs.

2. Appareil selon la revendication 1, **caractérisé en ce que** le diaphragme susceptible de se déplacer dans la direction y est composé d'au moins deux parties, qui sont reliées entre elles de façon mécaniquement rigide par au moins une pièce de couplage; une partie au moins se trouvant à l'extérieur de la structure de fente à anneau circulaire en état non actif et une autre partie au moins étant disposée à l'intérieur de ladite structure et où un déplacement du diaphragme dans la direction y conduit dans un état actif, au moins une partie se trouvant à l'extérieur de la fente à anneau circulaire vers l'intérieur afin de recouvrir partiellement ladite fente, alors qu'au moins une autre partie se trouvant à l'intérieur est conduite vers l'extérieur et couvre en même temps la partie située en face de la structure à anneau circulaire.

3. Appareil selon la revendication 1, **caractérisé en ce que** deux diaphragmes enlevés les uns des autres, susceptibles de se déplacer dans la direction y sont prévus de façon transversale par rapport à la direction y de balayage afin de réduire la largeur effective de rayonnement.

4. Appareil selon la revendication 1 à 3, **caractérisé en ce qu'**on a prévu un ou plusieurs aimants électriques pour le déplacement des diaphragmes.

5. Utilisation de l'appareil selon les revendications 1 à 4 dans une zone d'analyse pour des quantités différentes de matériaux cristallins, comme des récipients contenant des explosifs et des drogues, comme des bagages, des petits paquets, des lettres et quelque chose de similaire.
